**Europäisches Patentamt**

**European Patent Office**

**Office européen des brevets**

(19)

(11) Veröffentlichungsnummer: **0 064 653**
**B1**

(12) # EUROPÄISCHE PATENTSCHRIFT

(45) Veröffentlichungstag der Patentschrift:
**20.03.85**

(21) Anmeldenummer: **82103496.4**

(22) Anmeldetag: **24.04.82**

(51) Int. Cl.⁴: **F 16 L 55/12**

(54) **Vorrichtung zum Absperren von Gasleitungen.**

(30) Priorität: **12.05.81 DE 3118731**

(43) Veröffentlichungstag der Anmeldung:
**17.11.82 Patentblatt 82/46**

(45) Bekanntmachung des Hinweises auf die Patenterteilung:
**20.03.85 Patentblatt 85/12**

(84) Benannte Vertragsstaaten:
**AT CH FR GB LI NL**

(56) Entgegenhaltungen:
**DE - A - 2 712 952**
**DE - A - 2 712 953**
**DE - C - 711 974**

(73) Patentinhaber: **MANIBS R. Mannesmann GmbH & Ibs Nagel GmbH & Co. KG., Lempstrasse 24, D-5630 Remscheid-Bliedinghausen (DE)**

(72) Erfinder: **Servé, Klaus, Elberfelder Strasse 39, D-5608 Radevormwald (DE)**

(74) Vertreter: **Buse, Karl Georg, Dipl.-Phys. et al, Patentanwälte Dipl.-Phys. Buse Dipl.-Phys. Mentzel Dipl.-Ing. Ludewig Unterdörnen 114 Postfach 20 02 10, D-5600 Wuppertal 2 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung betrifft eine Vorrichtung zum Absperren von Gasleitungen mit zwei aufblasbaren Blasen, die mit einem biegsamen, die beiden hintereinander im Gasrohr anzuordnenden Blasen durchdringenden Führungsrohr in das für Reparatur- oder Montagearbeiten abzusperrende Gasrohr durch eine Bohrung in der Rohrwand einbringbar sind, wobei das Führungsrohr als Doppelrohr zum getrennten Aufblasen der beiden Blasen ausgebildet ist.

Bei der aus DE-C-711 974 bekannten Vorrichtung zum Absperren von Gasleitungen können die beiden aufblasbaren Blasen gleichzeitig oder einzeln nacheinander aufgeblasen werden, um die Gasleitung abzusperren. In der Praxis hat sich gezeigt, dass insbesondere die dem Gasdruck ausgesetzte Blase die Gasleitung nicht absolut abdichten kann. Unebenheiten oder dgl. an der Innenwand der Gasleitungen lassen geringe Gasmengen durch, die sich in dem Raum zwischen den beiden Blasen ansammeln.

Der Erfindung liegt die Aufgabe zugrunde, eine Vorrichtung zum Absperren von Gasleitungen der eingangs erläuterten Art zu schaffen, bei der solche Nachteile vermieden sind und das sich zwischen den beiden Blasen ansammelnde Schleichgas abgeführt werden kann.

Diese Aufgabe ist erfindungsgemäss dadurch gelöst, dass das als Doppelrohr ausgebildete Führungsrohr einen weiteren separaten Kanal aufweist, der mit dem von den beiden aufgeblasenen Blasen begrenzten Raum des Gasrohres in Verbindung steht. Durch diesen weiteren separaten Kanal kann das sich zwischen den beiden Blasen ansammelnde Schleichgas in einfacher Weise abgeführt werden.

Das als Doppelrohr ausgebildete und mit einem weiteren separaten Kanal versehene Führungsrohr kann von drei, unterschiedliche Durchmesser aufweisenden, ineinandergesteckten Schläuchen gebildet sein, wobei in dem innersten Schlauch mit dem kleinsten Durchmesser eine Drahtwendel eingesetzt ist. Durch das Ineinanderstecken der drei, unterschiedliche Durchmesser aufweisenden Schläuche wird eine kompakte Ausbildung der Vorrichtung erzielt, wobei die Schläuche durch die eingesteckte Drahtwendel die erforderliche Steifigkeit erhalten und trotzdem das Einführen in das Gasrohr durch eine seitliche Bohrung erlauben.

Der innerste Schlauch mit dem kleinsten Durchmesser kann an der vordersten, ersten Blase angeschlossen sein. Dadurch kann Druckluft durch diesen innersten Schlauch eingeführt und somit die vorderste, erste Blase aufgeblasen werden.

Der äusserste Schlauch mit dem grössten Durchmesser kann in dem von den beiden aufgeblasenen Blasen begrenzten Raum des Gasrohres münden. Durch den äussersten Schlauch mit dem grössten Durchmesser kann somit das Schleichgas aus den von den beiden aufgeblasenen Blasen begrenzten Raum herausgeführt werden.

Der mittlere Schlauch mit dem mittleren Durchmesser kann in die hintere, zweite Blase münden. Durch Einführen von Druckluft in den mittleren Schlauch mit dem mittleren Durchmesser kann somit die hintere, zweite Blase aufgeblasen werden.

Das als Doppelrohr ausgebildete und mit einem weiteren Kanal versehene Führungsrohr kann von einem an sich flexiblen, jedoch die erforderliche Steifigkeit für das Einstossen in das abzusperrende Gasrohr aufweisenden Schlauch gebildet sein, in dessen Hohlraum zur Bildung der weiteren Kanäle Schläuche mit kleineren Durchmessern eingesetzt sind. Mit diesem Schlauch können in einfacher Weise die daran befestigten Blasen in das abzusperrende Gasrohr eingesetzt werden, da der Schlauch an sich flexibel ist und dabei jedoch die erforderliche Steifigkeit für das Einstossen in das abzusperrende Gasrohr aufweist. In vorteilhafter Weise kann dabei der Schlauch von einem handelsüblichen Wasserschlauch aus Gummi gebildet sein, wobei die Wand mit einer Einlage aus Cord oder dgl. verstärkt ist.

In dem Hohlraum des als Führungsrohr dienenden Schlauches können mehrere Schläuche mit kleinerem Durchmesser nebeneinander eingesetzt sein. In dem Hohlraum des Schlauches sind somit nebeneinander mehrere Schläuche mit kleinerem Durchmesser eingesetzt, die die separaten Kanäle für die erste Blase, die zweite Blase und den Zwischenraum zwischen den beiden Blasen bilden.

Die in dem Hohlraum des als Führungsrohr dienenden Schlauches eingesetzten Schläuche können einzeln, im Bereich der ersten Blase, im Bereich der zweiten Blase bzw. im Bereich des von den beiden aufgeblasenen Blasen begrenzten Raumes Durchbrüche der Wandung des als Führungsrohr dienenden Schlauches durchgreifen. Dadurch sind in einfacher Weise die in dem Hohlraum des Schlauches eingesetzten Schläuche mit den kleineren Durchmessern einzeln mit den beiden Blasen bzw. mit dem Raum zwischen den beiden Blasen verbindbar.

Die in dem Hohlraum des als Führungsrohr dienenden Schlauches nebeneinander angesetzten Schläuche können mit ihren freien Enden luftdicht bzw. gasdicht in die Durchbrüche der Wandung des als Führungsrohr dienenden Schlauches gehaltert sein. Dadurch ist der Hohlraum des als Führungsrohr dienenden Schlauches ebenfalls als Kanal benutzbar.

Die den Blasen abgekehrten Enden der Schläuche können ausserhalb des abzusperrenden Gasrohres an ineinandergesteckte Rohre angeschlossen sein. Mit diesen ineinandergesteckten Rohren ist ein Längsverschieben der Vorrichtung in einer an dem Gasrohr angesetzten Führungshülse möglich.

Auf der Zeichnung ist die Erfindung in zwei Ausführungsbeispielen dargestellt, und zwar zeigen:

Fig. 1 ein im Schnitt dargestelltes Gasrohr mit zwei eingesetzten Blasen zum Absperren des Gasrohres, teilweise abgebrochen,

Fig. 2 die am Gasrohr angesetzte Führungsbuchse im Schnitt mit dem darin eingesetzten Teil der Vorrichtung,

Fig. 3 die erfindungsgemässe Vorrichtung zum Absperren von Gasleitungen im Längsschnitt und grösseren Massstab,

Fig. 4 einen Schnitt nach der Linie IV-IV der Fig. 2 im grösseren Massstab, und

Fig. 5 ein zweites Ausführungsbeispiel des als Führungsrohr dienenden Schlauches im Schnitt und grösseren Massstab.

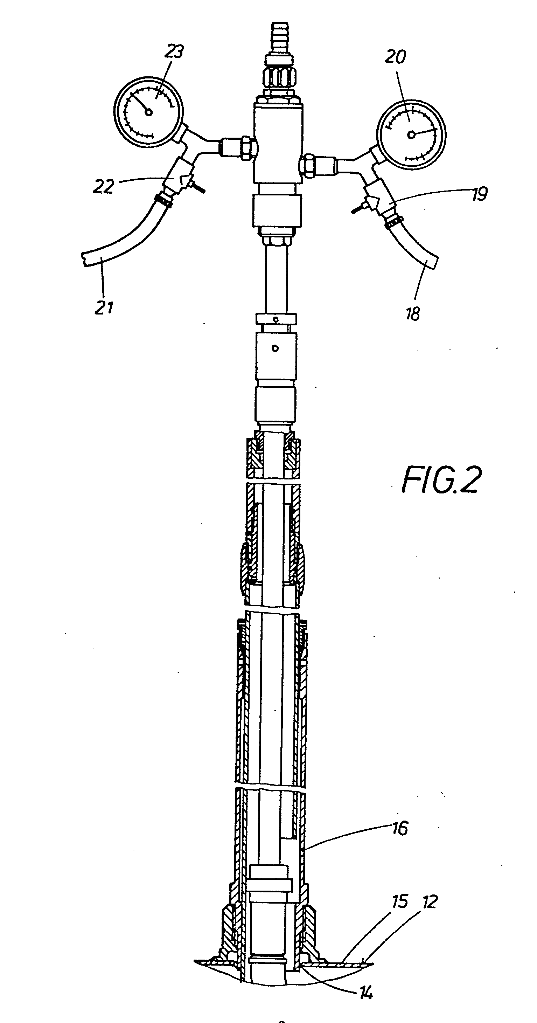

Die auf der Zeichnung dargestellte Vorrichtung zum Absperren von Gasleitungen besteht aus zwei aufblasbaren Blasen 10 und 11, die mit einem biegsamen, die beiden hintereinander im Gasrohr 12 anzuordnenden Blasen 10, 11 durchdringenden Führungsrohr 13 in das für Reparatur- und Montagearbeiten abzusperrende Gasrohr 12 durch eine Bohrung 14 in der Rohrwand 15 einbringbar sind. Zum Absperren der Gasleitung 12 mit der erfindungsgemässen Vorrichtung wird zunächst in bekannter Weise die Bohrung 14 in die Rohrwand 15 des Gasrohres 12 eingebracht und eine Führungsbuchse 16 befestigt. Die in der Fig. 2 dargestellte Führungsbuchse 16 verläuft dabei rechtwinklig zur Gasleitung 12. Durch Vorschieben innerhalb der Führungsbuchse 16 werden die beiden aufblasbaren Blasen 10 und 11 in das Gasrohr 12 eingebracht, und zwar durch Vorstossen mit dem Führungsrohr 13, wobei das biegsame Führungsrohr 13 eine Umlenkung mit einem Winkel von 90° erfährt.

Nach dem Einführen der Vorrichtung in das Gasrohr 12 werden die beiden Blasen 10 und 11 aufgeblasen, so dass die beiden Blasen 10 und 11 sich druckschlüssig gegen die Innenwand 17 des Gasrohres 12 anlegen und somit absperren. Die beiden Blasen 10 und 11 können dabei gleichzeitig oder einzeln hintereinander aufgeblasen werden.

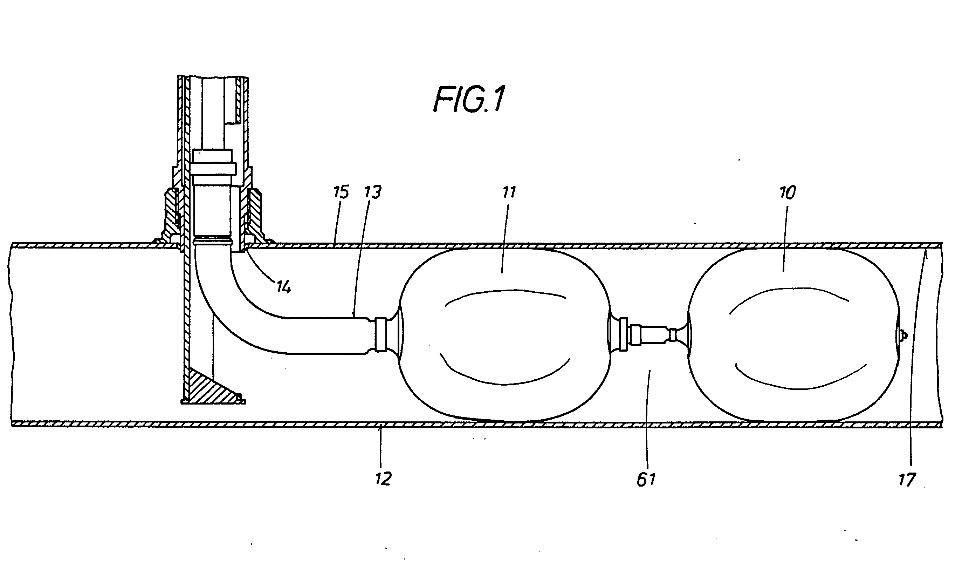

Das Aufblasen der beiden Blasen 10 und 11 erfolgt mit Druckluft. Am oberen Ende der in Fig. 1 dargestellten Vorrichtung ist die Druckluftleitung 18 dargestellt, mit deren Druckluft die vordere Blase 10 aufblasbar ist. An der Druckluftleitung 18 ist dabei ein Absperrventil 19 und ein Manometer 20 vorgesehen. Mit dem Manometer 20 kann dabei der in der vorliegenden Blase 10 herrschende Druck gemessen und mit dem Absperrventil 19 die Zufuhr der Druckluft geregelt werden.

Der hintenliegenden Blase 11 ist die Druckluftleitung 21, das Absperrventil 22 und das Manometer 23 zugeordnet. Damit kann auch die zweite, hintere Blase 11 mit dem erforderlichen Druck aufgeblasen und der Druck kontrolliert werden.

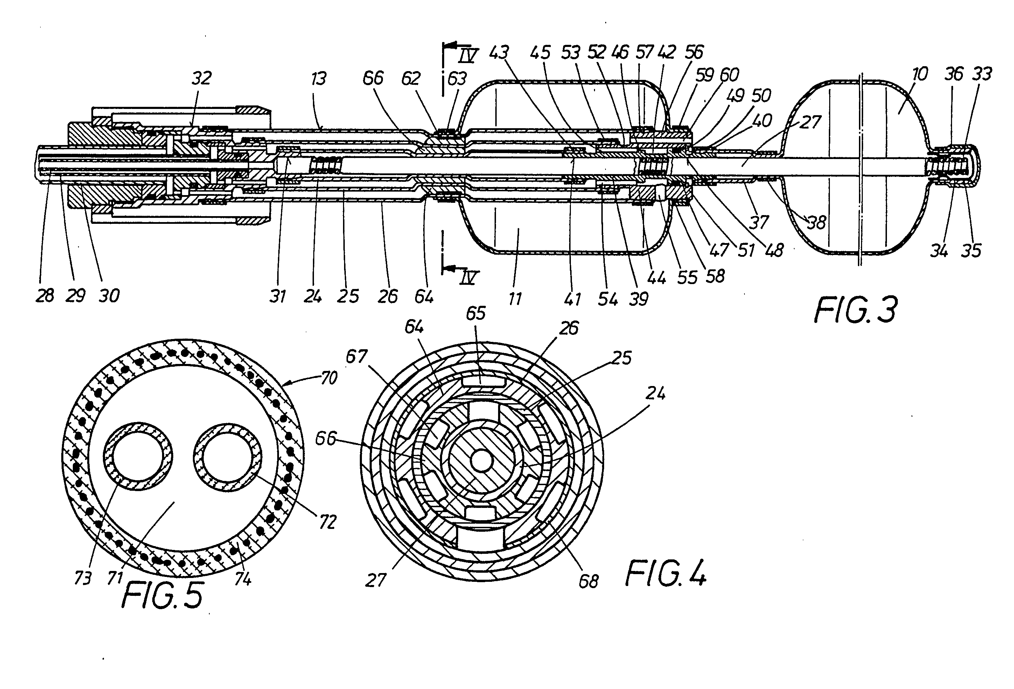

Wie insbesondere aus der Fig. 3 ersichtlich, ist das Führungsrohr 13 von drei, unterschiedliche Durchmesser aufweisenden, ineinandergesteckten Schläuchen 24, 25 und 26 gebildet, wobei in dem innersten Schlauch 24 mit dem kleinsten Durchmesser eine Drahtwendel 27 eingesetzt ist. Die Drahtwendel 27 gibt dabei dem Führungsrohr 23 die erforderliche Steifigkeit, um das Einschieben der beiden Blasen 10, 11 in das Gasrohr 12 zu ermöglichen. Dabei weist die Drahtwendel 27 jedoch die erforderliche Elastizität bzw. Biegsamkeit auf, um das Einschieben durch die Führungsbuchse 16 in das rechtwinklig dazu verlaufende Gasrohr 12 zu ermöglichen.

Die den Blasen 10, 11 abgekehrten Enden der Schläuche 24, 25, 26 sind ausserhalb des abzusperrenden Gasrohres 12 an ineinandergesteckte Rohre 28, 29, 30 angeschlossen. Diese Rohre 28, 29, 30 sind zusammen in der Führungsbuchse 16 für die Montage und Demontage der Vorrichtung verschiebbar und mit entsprechenden Dichtungen geführt, so dass ein Ausströmen von Gas verhindert wird.

Von den Schläuchen 24, 25 und 26 wird der Teil des Führungsrohres 13 gebildet, der zum Einführen in das Gasrohr 12 biegsam sein muss. Die Drahtwendel 27 ist dabei in einer Ausnehmung 31 des Verbindungsteiles 32 gehaltert, mit dem die Schläuche 24, 25 und 26 an den Rohren 28, 29, 30 gehaltert sind. Die Drahtwendel 27 durchgreift dabei die beiden Blasen 10 und 11 und endet am vorderen Ende der vorderen Blase 10. Das vordere Ende der Drahtwendel ist dabei in eine einendig geschlossene Buchse 33 eingeklemmt. Die äussere Mantelfläche 34 der Buchse 33 dient als Anlagefläche für das vordere Ende 35 der vorderen Blase 10. Das vordere Ende 35 der vorderen Blase 10 ist dabei mit einer Befestigungsbuchse 36 gehaltert.

Das rückwärtige Ende 37 ist ebenfalls schlauchförmig ausgebildet. Unmittelbar hinter dem rückwärtigen Ende der Blase 10 ist dabei das schlauchförmige Ende 37 mit einem Befestigungsring 38 auf der Drahtwendel 27 festgesetzt. Das freie Ende des schlauchförmigen Ansatzes 37 ist auf eine Verbindungshülse 39 aufgespannt und mit einem Befestigungsring 40 gehalten.

Die Verbindungshülse 39 ist etwa am vorderen Ende der zweiten Blase 11 angeordnet, welches der ersten Blase 10 zugekehrt ist. Die Verbindungshülse 39 weist dabei einen Durchbruch 41 auf, welcher von der Drahtwendel 27 durchgriffen ist. Die Verbindungshülse 39 weist dabei etwa mittig eine Einschnürung 42 auf, deren Boden etwas nach innen eingedrückt ist, um eine Klemmung auf der Drahtwendel 27 zu erzielen.

Das der ersten Blase 10 abgekehrte Ende der Verbindungshülse 39 dient zum Aufsetzen des inneren Schlauches 24, wobei der innere Schlauch 24 mit einem Befestigungsring 43 gehaltert ist. Durch das innere Rohr 28, den inneren Schlauch 24, die Verbindungshülse 39 und das rückwärtige, schlauchförmige Ende 37 der vorderen Blase 10 kann somit Druckluft zur vorderen Blase 10 geführt und diese aufgeblasen werden.

Auf die Verbindungshülse 39 ist eine zweite Verbindungshülse 44 aufgeschoben und zwar von der Seite, die der ersten Blase 10 abgekehrt ist, Die zweite Verbindungshülse 44 weist dabei an der inneren Mantelfläche längsverlaufende rippenförmige Vorsprünge 45 auf, die gegen die äussere Mantelfläche der ersten Verbindungshülse 39 anliegen. Das Aufschieben der zweiten Verbindungshülse 44 auf die erste Verbindungshülse 39 erfolgt dabei so lange, bis die Rippen 45 mit ihren vorderen Enden gegen einen ringförmigen Flansch 46 zur Anlage kommen. Der Flansch 46 ist dabei an der einen Seite der Einschnürung 42 vorgesehen. An der anderen Seite der Einschnürung 42 ist ein Bereich 47 mit einem grösseren Durchmesser vorgesehen, der gegen die innere Mantelfläche der zweiten Verbindungshülse 44 zur Anlage kommt. In dem Bereich 47 mit dem grösseren Durchmesser ist eine umlaufende Nut 48 mit einem eingelegten Dichtungsring 49 vorgesehen, so dass ein luftdichter Abschluss zwischen den beiden Verbindungshülsen 39 und 44 erzielt ist. Gegen die der Einschnürung 42 abgekehrte Seite des Bereiches 47 mit dem grösseren Durchmesser legt sich ein Sprengring 50 an, der in eine umlaufende Nut 51 der Verbindungshülse 44 eingesetzt ist.

Mit dem Sprengring 50 ist somit die zweite Verbindungshülse 44 gegen Rückwärtsverschieben auf der Verbindungshülse 39 gehalten. Mit dem Dichtungs-

ring 49 wird dabei eine luftdichte Verbindung zwischen den beiden Verbindungshülsen 39 und 44 geschaffen. Die zweite Verbindungshülse 44 weist dabei an ihrem der ersten Blase 10 abgekehrten Ende einen Bereich 52 mit einem kleineren Durchmesser auf. Auf diesen Bereich 52 ist der mittlere Schlauch 25 aufgesetzt und mit einem Befestigungsring 53 gehaltert. Aus dem mittleren Schlauch 25 kann somit Druckluft durch die Freiräume 54 zwischen den Rippen 45 der zweiten Verbindungshülse 44 zu der Einschnürung 42 gelangen. Der von der Einschnürung 42 gebildete Raum steht dabei über radial nach aussen verlaufende Bohrungen 55 der zweiten Verbindungshülse 44 mit dem Innenraum der zweiten Blase 11 in Verbindung, so dass mit Druckluft aus dem mittleren Rohr 29 und dem mittleren Schlauch 25 die zweite Blase 11 aufgeblasen werden kann.

Der Bereich 56 mit dem grösseren Durchmesser der zweiten Verbindungshülse 44 dient einerseits zum Aufsetzen des äusseren Schlauches 26, der mit einem Befestigungsring 57 gehaltert ist und andererseits zur Befestigung des Endes 58 der zweiten Blase 11, die der ersten Blase 10 zugekehrt ist. Dieses rohrförmige Ende 58 der Blase 11 ist ebenfalls mit einem Befestigungsring 59 gehaltert.

Der Bereich 56 mit dem grösseren Durchmesser der zweiten Verbindungshülse 44 weist auf dem Umfang verteilt mehrere axial verlaufende Bohrungen 60 auf, so dass der Innenraum des äusseren Schlauches 26 mit dem Zwischenraum 61 zwischen den beiden Blasen 10, 11 verbunden ist. Das in den Zwischenraum 61 zwischen den beiden Blasen 10 und 11 gelangende Schleichgas kann somit durch die Bohrungen 60, Schlauch 26 und Rohr 30 abgeleitet werden.

Das Ende 62 der zweiten Blase 11, welches der ersten Blase 10 abgekehrt ist, ist mit einem Befestigungsring 63 auf der äusseren Mantelfläche des äusseren Schlauches 26 angedrückt. Die innere Abstützung des äusseren Schlauches 26 erfolgt mit einem geschlitzten Ring 64, der in seinem äusseren Mantel mehrere axial verlaufende Nuten 65 als Durchströmkanäle aufweist. Der geschlitzte Ring 64 stützt sich nach innen gegen die äussere Mantelfläche des mittleren Schlauches 25 ab. Der mittlere Schlauch 25 ist gegen die äussere Mantelfläche eines zweiten geschlitzten Ringes 66 abgestützt, der ebenfalls an seiner äusseren Mantelfläche axial verlaufende Nuten 67 als Durchströmkanäle aufweist. Der innere geschlitzte Ring 66 ist dabei gegen die äussere Mantelfläche des inneren Schlauches 24 angedrückt, wobei der innere Schlauch 24 gegen die Aussenseite der Drahtwendel 27 angedrückt ist. In diesem Bereich erfolgt somit die Durchströmung des inneren Schlauches 24 durch den inneren Freiraum der Drahtwendel 27. Um ein kraftschlüssiges Andrücken der geschlitzten Ringe 64 und 66 zu erhalten, ist in der äusseren Mantelfläche des geschlitzten Ringes 64 eine Blattfeder 68 eingesetzt.

Die Fig. 5 zeigt ein zweites Ausführungsbeispiel des als Doppelrohr ausgebildeten und mit einem weiteren Kanal versehenen Führungsrohres 13. Dieses Führungsrohr 13 ist von einem an sich flexiblen, jedoch die erforderliche Steifigkeit für das Einstossen in das abzusperrende Gasrohr 12 aufweisenden Schlauch 70 gebildet, in dessen Hohlraum 71 zur Bildung der weiteren Kanäle zwei Schläuche 72, 73 mit kleineren Durchmessern nebeneinander eingesetzt sind. Die beiden nebeneinander eingesetzten Schläuche 72, 73 durchgreifen einzeln, im Bereich der ersten Blase 10, im Bereich der zweiten Blase 11 bzw. im Bereich des von den beiden aufgeblasenen Blasen 10, 11 begrenzten Raumes 61 nicht näher dargestellte Durchbrüche der Wandung 74 des als Führungsrohr 13 dienenden Schlauches 70. Die beiden eingesetzten Schläuche 72, 73 sind mit ihren freien Enden dabei luftdicht bzw. gasdicht in den Durchbrüchen der Wandung 74 des als Führungsrohr 13 dienenden Schlauches 70 gehaltert. Dadurch ist in einfacher Weise auch noch der Hohlraum 71 des als Führungsrohr 13 dienenden Schlauches 70 als Kanal benutzbar.

Wie bereits erwähnt, ist die dargestellte Ausführung lediglich eine beispielsweise Verwirklichung der Erfindung und diese nicht darauf beschränkt. Vielmehr sind noch mancherlei andere Ausführungen und Abänderungen möglich.

Bezugszeichenliste

10 Blase, vorne
11 Blase, hinten
12 Gasrohr
13 Führungsrohr
14 Bohrung
15 Rohrwand
16 Führungsbuchse
17 Innenwand von 12
18 Druckluftleitung für 10
19 Absperrventil für 10
20 Manometer für 10
21 Druckluftleitung für 11
22 Absperrventil für 11
23 Manometer für 11
24 Schlauch, innen
25 Schlauch, Mitte
26 Schlauch, aussen
27 Drahtwendel
28 Rohr, innen
29 Rohr, Mitte
30 Rohr, aussen
31 Ausnehmung in 32
32 Verbindungsteil
33 Buchse
34 äussere Mantelfläche von 33
35 vorderes Ende von 10
36 Befestigungsbuchse
37 rückwärtiges Ende von 10
38 Befestigungsring
39 Verbindungshülse
40 Befestigungsring
41 Durchbruch in 39
42 Einschnürung in 39
43 Befestigungsring
44 zweite Verbindungshülse
45 rippenförmige Vorsprünge in 44
46 ringförmiger Flansch
47 Bereich von 42
48 umlaufende Nut für 49
49 Dichtungsring
50 Sprengring

51 umlaufende Nut für 50
52 Bereich von 44
53 Befestigungsring
54 Freiräume zwischen 45
55 Bohrungen
56 Bereich von 44
57 Befestigungsring
58 Ende von 11
59 Befestigungsring
60 Bohrungen
61 Zwischenraum
62 Ende von 11
63 Befestigungsring
64 geschlitzter Ring
65 Nuten in 64
66 zweiter geschlitzter Ring
67 Nuten in 66
68 Blattfeder
70 Schlauch
71 Hohlraum
72 Schlauch
73 Schlauch
74 Wandung

**Patentansprüche**

1. Vorrichtung zum Absperren von Gasleitungen mit zwei aufblasbaren Blasen (10, 11), die mit einem biegsamen, die beiden hintereinander im Gasrohr (12) anzuordnenden Blasen (10, 11) durchdringenden Führungsrohr (13) in das für Reparatur- oder Montagearbeiten abzusperrende Gasrohr (12) durch eine Bohrung (14) in der Rohrwand einbringbar sind, wobei das Führungsrohr (13) als Doppelrohr zum getrennten Aufblasen der beiden Blasen (10, 11) ausgebildet ist, dadurch gekennzeichnet, dass das als Doppelrohr ausgebildete Führungsrohr (13) einen weiteren Kanal (26, 73) aufweist, der gegenüber den beiden Blasen (10, 11) abgeschlossen ist, aber zu dem von den beiden Blasen (10, 11) begrenzten Zwischenraum (61) des Gasrohres (12) hin geöffnet ist und einen Ablass für Schleichgas bildet.

2. Vorrichtung nach Anspruch 1, dadurch gekennzeichnet, dass das als Doppelrohr ausgebildete und mit einem weiteren separaten Kanal (26) versehene Führungsrohr (13) von drei, unterschiedliche Durchmesser aufweisenden, ineinandergesteckten Schläuchen (24, 25, 26) gebildet ist, wobei in dem innersten Schlauch (24) mit dem kleinsten Durchmesser eine Drahtwendel (27) eingesetzt ist.

3. Vorrichtung nach Anspruch 2, dadurch gekennzeichnet, dass der innerste Schlauch (24) mit dem kleinsten Durchmesser an der vordersten, ersten Blase (10) angeschlossen ist.

4. Vorrichtung nach einem der Ansprüche 2 oder 3, dadurch gekennzeichnet, dass der äusserste Schlauch (26) mit dem grössten Durchmesser in dem von den beiden aufgeblasenen Blasen (10, 11) begrenzten Raum (61) des Gasrohres (12) mündet.

5. Vorrichtung nach einem der Ansprüche 2 bis 4, dadurch gekennzeichnet, dass der mittlere Schlauch (25) mit dem mittleren Durchmesser in die hintere, zweite Blase (11) mündet.

6. Vorrichtung nach Anspruch 1, dadurch gekennzeichnet, dass das als Doppelrohr ausgebildete und mit einem weiteren Kanal (73) versehene Führungsrohr (13) von einem an sich flexiblen, jedoch die erforderliche Steifigkeit für das Einstossen in das abzusperrende Gasrohr (12) aufweisenden Schlauch (70) gebildet ist, in dessen Hohlraum (71) zur Bildung der weiteren Kanäle Schläuche (72, 73) mit kleineren Durchmessern eingesetzt sind.

7. Vorrichtung nach Anspruch 6, dadurch gekennzeichnet, dass in dem Hohlraum (71) des als Führungsrohr (13) dienenden Schlauches (70) mehrere Schläuche (72, 73) mit kleineren Durchmessern nebeneinander eingesetzt sind.

8. Vorrichtung nach Anspruch 6 oder 7, dadurch gekennzeichnet, dass die in dem Hohlraum (71) des als Führungsrohr (13) dienenden Schlauches (70) nebeneinander eingesetzten Schläuche (72, 73) einzeln, im Bereich der ersten Blase (10), im Bereich der zweiten Blase (11), bzw. im Bereich des von den beiden aufgeblasenen Blasen begrenzten Raumes (61) Durchbrüche der Wandung (74) des als Führungsrohr (13) dienenden Schlauches (70) durchgreifen.

9. Vorrichtung nach einem der Ansprüche 6 bis 8, dadurch gekennzeichnet, dass die in dem Hohlraum (71) des als Führungsrohr (13) dienenden Schlauches (70) nebeneinander eingesetzten Schläuche (72, 73) mit ihren freien Enden luftdicht bzw. gasdicht in den Durchbrüchen der Wandung des als Führungsrohr (13) dienenden Schlauches (70) gehalten sind.

10. Vorrichtung nach einem der Ansprüche 2 bis 9, dadurch gekennzeichnet, dass die den Blasen (10, 11) abgekehrten Enden der Schläuche (24, 25, 26) ausserhalb des abzusperrenden Gasrohres (12) an ineinandergesteckte Rohre (28, 29, 30) angeschlossen sind.

**Claims**

1. A device for shutting off gas lines, including two inflatable bladders (10, 11) adapted to be inserted into the gas pipe (12) to be shut off for repair or assembly work, through a bore (14) in the pipe walls, together with a flexible guide tube (13) passing through the two bladders (10, 11) to be arranged successively in the gas pipe (12), said guide tube (13) being designed as twin tube for separate inflation of the two bladders (10, 11), characterized in that the guide tube (13) designed as twin tube has another channel (26, 73) which is shut off towards the two bladders (10, 11), but opens towards the space (61) of the gas pipe (12) defined by the two bladders (10, 11), and provides an outlet for floating gas.

2. A device as claimed in the claim 1, characterized in that the guide tube (13) designed as twin tube and provided with another separate channel (26) is comprised of three hoses (24, 25, 26) of different diameters and fitted into one another, a helical wire (27) being inserted into the innermost hose (24) having the smallest diameter.

3. A device as claimed in the claim 2, characterized in that the innermost hose (24) of the smallest diameter connects to the foremost first bladder (10).

4. A device as claimed in any one of the claims 2 or 3, characterized in that the outermost hose (26) of the largest diameter opens into the space (61) of the gas pipe (12), defined by the two inflated bladders (10, 11).

5. A device as claimed in any one of the claims 2 to 4, characterized in that the interposed hose (25) of the medium diameter opens into the rear second bladder (11).

6. A device as claimed in the claim 1, characterized in that the guide tube (13) designed as twin tube and provided with another channel (73) is comprised of an inherently flexible hose (70), however, having the stiffness necessary for penetration into the gas pipe (12) to be shut off, into whose hollow space (71) hoses (72, 73) of smaller diameters are inserted for providing the other channels.

7. A device as claimed in the claim 6, characterized in that several hoses (72, 73) of smaller diameters are inserted adjacently each other in the hollow space (71) of the hose (70) serving as guide tube (13).

8. A device as claimed in the claim 6 or 7, characterized in that the hoses (72, 73) inserted adjacently each other in the hollow space (71) of the hose (70) serving as guide tube (13), individually enter through apertures in the wall (74) of the hose (70) serving as guide tube (13), in the area of the first bladder (10), in the area of the second bladder (11), respectively in the area of the space (61) defined by the two inflated bladders.

9. A device as claimed in any one of the claims 6 to 8, characterized in that the hoses (72, 73) inserted adjacently each other in the hollow space (71) of the hose (70) serving as guide tube (13), have their free ends mounted in airtight, resp. gastight manner in the apertures of the walls of the hose (70) serving as guide tube (13).

10. A device as claimed in any one of the claims 2 to 9, characterized in that the ends of the hoses (24, 25, 26) turned away from the blatters (10, 11) connect to tubes (28, 29, 30) fitted into one another outside of the gas pipe (12) being shut off.

**Revendications**

1. Dispositif d'obturation de conduits de gaz comportant deux vessies gonflables (10, 11), qui peuvent être mises en place au moyen d'un tube de guidage (13) traversant les deux vessies (10, 11) à disposer l'une derrière l'autre dans la conduite de gaz (12) à obturer pour des travaux de réparation ou de montage, par un trou (14) ménagé dans la paroi de conduite, le tube de guidage (13) étant agencé comme un double tube pour un gonflage séparé des deux vessies (10, 11), caractérisé en ce que le tube de guidage (13) agencé comme un double tube comporte un autre canal (26, 73), qui est fermé par rapport aux deux vessies (10, 11) mais qui est ouvert en direction du volume intermédiaire (61) de la conduite de gaz (12) délimité par les deux vessies (10, 11) et qui constitue une décharge pour du gaz de fuite.

2. Dispositif selon la revendication 1, caractérisé en ce que le tube de guidage (13) agencé comme un double tube est pourvu d'un autre canal séparé (26) et est constitué par trois tuyaux souples (24, 25, 26) engagés l'un dans l'autre et présentant des diamètres différents, une spirale en fil (27) étant disposée dans le tuyau souple (24) placé complètement à l'intérieur et de diamètre minimal.

3. Dispositif selon la revendication 2, caractérisé en ce que le tuyau souple complètement intérieur (24) de diamètre minimal est relié à la première vessie (10) placée complètement en avant.

4. Dispositif selon une des revendications 2 ou 3, caractérisé en ce que le tuyau souple complètement extérieur (26) et de diamètre maximal débouche dans le volume (61) de la conduite de gaz (12) qui est délimité par les deux vessies gonflées (10, 11).

5. Dispositif selon une des revendications 2 à 4, caractérisé en ce que le tuyau souple intermédiaire (25) de diamètre intermédiaire débouche dans la seconde vessie arrière (11).

6. Dispositif selon la revendication 1, caractérisé en ce que le tube de guidage (13) agencé comme un double tube pourvu d'un autre canal (73) est constitué par un tuyau souple (70) intrinsèquement flexible mais possédant cependant la rigidité nécessaire pour l'introduction dans la conduite de gaz à obturer (12), et dans la cavité (71) duquel sont disposés des tuyaux souples (72, 73) de plus petit diamètre pour former les autres canaux.

7. Dispositif selon la revendication 6, caractérisé en ce que dans la cavité (71) du tuyau souple (70) servant de tube de guidage (13), sont disposés l'un à côté de l'autre plusieurs tuyaux souples (72, 73) de plus petit diamètre.

8. Dispositif selon la revendication 6 ou 7, caractérisé en ce que les tuyaux souples (72, 73) disposés l'un à côté de l'autre dans la cavité (71) du tuyau souple (70) servant de tube de guidage (13) s'accrochent individuellement, dans la zone de la première vessie (10), dans la zone de seconde vessie (11) ou bien dans la zone du volume (61) délimité par les deux vessies gonflées, dans des évidements de la paroi (74) du tuyau souple (70) servant de tube de guidage (13).

9. Dispositif selon une des revendications 6 à 8, caractérisé en ce que les tuyaux souples (72, 73) disposés l'un à côté de l'autre dans la cavité (71) du tuyau souple (70) servant de tube de guidage (13) sont maintenus par leurs extrémités libres de façon étanche à l'air ou étanche aux gaz dans les évidements de la paroi du tuyau souple (70) servant de tube de guidage (13).

10. Dispositif selon une des revendications 2 à 9, caractérisé en ce que les extrémités, opposées aux vessies (10, 11) des tuyaux souples (24, 25, 26), sont reliées à l'extérieur de la conduite de gaz à fermer (12) à des tubes emboîtés l'un dans l'autre (28, 29, 30).

*FIG.1*

0 064 653

0 064 653

FIG.2

9

FIG.3

FIG.4

FIG.5

0 064 653